# EUROPÄISCHE PATENTSCHRIFT

(11) **EP 2 846 429 B1**
(45) Veröffentlichungstag und Bekanntmachung des Hinweises auf die Patenterteilung: **10.10.2018**
(21) Anmeldenummer: 14179983.3
(22) Anmeldetag: 06.08.2014
(51) Int. Cl.: H02G 3/12

(54) **Elektroinstallationsgehäuse**
Electrical installation housing
Boîtier d'installation électrique

(30) Priorität: 06.08.2013 DE 102013108487
(43) Veröffentlichungstag der Anmeldung: 11.03.2015
(73) Patentinhaber: Günther Spelsberg GmbH & Co. KG, 58579 Schalksmühle (DE)
(72) Erfinder: Hauck, Dirk, 58579 Schalksmühle (DE)
(74) Vertreter: Michalski Hüttermann & Partner Patentanwälte mbB

(56) Entgegenhaltungen:
- EP-A2- 1 791 236
- US-A1- 2002 142 650
- US-B1- 7 304 235

## Beschreibung

Die Erfindung betrifft ein Elektroinstallationsgehäuse sowie ein Flanschbauteil zum Einstecken in eine in dem Gehäuse vorgesehene Öffnung und einen Flanschverbinder zur formschlüssigen Verbindung des in die Öffnung eingesteckten Flanschbauteils mit dem Elektroinstallationsgehäuse.

Im Bereich der Elektroinstallation sind verschiedene Elektroinstallationsgehäuse mit Öffnungen in ihren Wandungen bekannt. Die Öffnungen können dabei dem Einführen von elektrischen Kabeln in das Elektroinstallationsgehäuse dienen, aber auch dem Anschluss des Gehäuses an eine andere Einrichtung, wie ein anderes Gehäuse.

Derartige Elektroinstallationsgehäuse weisen in der Regel an verschiedenen Seiten Öffnungen in ihren Wandungen auf, z.B. um Kabel aus unterschiedlichen Richtungen in das Elektroinstallationsgehäuse einführen zu können. Nicht genutzte Öffnungen in den Wandungen des Elektroinstallationsgehäuses werden mit Abdeckungen verschlossen, wobei jeweils eine Abdeckung von außen auf eine Öffnung aufgesteckt wird. Üblich ist dabei, dass die Abdeckung Rastnasen aufweist und diese Rastnasen beim Aufstecken der Abdeckung auf die Öffnung an den Durchbruchkanten der Öffnung einrasten.

In der EP 1791236 A2 wird eine Elektroinstallationsdose zur Installation einer elektrischen Einrichtung, wie einer Leuchte oder eines Lautsprechers, insbesondere für den Betoneinbau, mit einem Gehäuse und einer in dem Gehäuseboden vorgesehenen Öffnung gezeigt. In der Öffnung ist ein senkrecht zum Gehäuseboden verschiebbares Anschlussbauteil vorgesehen, wodurch bei Betonfiligrandecken auf universelle Weise eine einfache Installation von elektrischen Einrichtungen bei gleichzeitiger Erzielung einer optisch ansprechenden Sichtbetondecke ermöglicht.

Problematisch ist jedoch, dass derartige Abdeckungen sehr einfach von außen abgenommen werden können und dass insbesondere bei größeren Öffnungen die Gehäusestabilität im Bereich der Öffnung reduziert ist.

Es ist die Aufgabe der Erfindung, ein derartiges Elektroinstallationsgehäuse anzugeben, das einen sicheren Verschluss der Gehäuseöffnungen und eine hohe Stabilität im Öffnungsbereich aufweist.

Diese Aufgabe wird durch den Gegenstand des Patentanspruchs 1 gelöst. Bevorzugte Weiterbildungen sind in den Unteransprüchen angegeben.

Erfindungsgemäß ist somit ein Elektroinstallationsgehäuse vorgesehen, mit einem Wandungen aufweisenden Gehäuseteil, einem zur Aufnahme in einer Öffnung einer Wandung vorgesehenen Flanschbauteil und einem zur Verriegelung des Flanschbauteils in der Öffnung vorgesehenen Flanschverbinder, wobei der Flanschverbinder rahmenartig ausgebildet ist und zwei seitliche Riegel, einen oberen Querholm und einen unteren Querholm aufweist und das Flanschbauteil in der Öffnung mit dem Flanschverbinder formschlüssig verbindbar ist.

Es ist somit ein wesentlicher Punkt der Erfindung, das in die Öffnung der Wandung eingesteckte Flanschbauteil über den Flanschverbinder formschlüssig mit dem Elektroinstallationsgehäuse zu verbinden, wobei der rahmenartige Flanschverbinder innerhalb des Elektroinstallationsgehäuses auf das in die Öffnung eingesteckte Flanschbauteil aufsteckbar ist.

Für die Ausgestaltung des erfindungsgemäßen Elektroinstallationsgehäuses ist bevorzugt vorgesehen, dass die Öffnung rechteckig mit einer oberen Durchbruchkante, einer unteren Durchbruchkante und zwei seitlichen Durchbruchkanten ausgebildet ist und eine seitliche Wange an einer seitlichen Durchbruchkante mit einer parallel zu dieser verlaufenden Schiene aufweist. Besonders bevorzugt ist vorgesehen, dass die rechteckige Öffnung in der Wandung an jeder ihrer seitlichen Durchbruchkanten eine Wange mit jeweils einer Schiene aufweist.

Ferner sieht die Ausgestaltung des erfindungsgemäßen Elektroinstallationsgehäuses vor, dass das Flanschbauteil einen Steg mit einer Aufkantung und einer der Aufkantung gegenüberliegenden flachen Stegseite aufweist und dass wenigsten einer der seitlichen Riegel des Flanschverbinders ein Außenprofil aufweist, wobei bevorzugt vorgesehen ist, dass der rahmenartige Flanschverbinder, korrespondierend zu den seitlichen Wangen der Öffnungen, an den jeweiligen seitlichen Riegeln jeweils ein Außenprofil aufweist.

In diesem Zusammenhang sieht eine bevorzugte Weiterbildung der Erfindung vor, dass im eingesteckten Zustand des Flanschbauteils in die Öffnung die flache Stegseite des Flanschbauteils an der Wange der Öffnung anliegt und für die formschlüssige Verbindung des Flanschbauteils mit dem Elektroinstallationsgehäuse das Flanschbauteil mit dem Außenprofil über die Aufkantung des Stegs und die Schiene der Wange schiebbar ist.

Erfindungsgemäß weist das Flanschbauteil zwei seitliche Stege, einen oberen Steg und einen unteren Steg auf. Eine besonders bevorzugte Weiterbildung der Erfindung sieht diesbezüglich vor, dass das Flanschbauteil einen umlaufenden Steg mit zwei seitlichen Stegen, einem oberen Steg und einen unteren Steg aufweist, wobei die Eckbereiche jeweils unterbrochen sind. Der umlaufende Steg dient einer höheren Steifigkeit des Flanschbauteils. Die seitlichen Stege weisen dabei jeweils eine Aufkantung und einer der Aufkantung gegenüberliegende flache Stegseite auf. Die Ausnehmungen im Eckbereich des umlaufenden Stegs sind vorgesehen, damit im eingesteckten Zustand des Flanschbauteils in die Öffnung der rahmenartige Flanschverbinder über die Aufkantung des seitlichen Stegs des Flanschbauteils und die Schiene der Wange aufgesteckt werden kann.

Eine bevorzugte Weiterbildung der Erfindung sieht vor, dass der obere Steg und der untere Steg des Flanschbauteils jeweils mindestens eine Materialausnehmung aufweist. Besonders bevorzugt ist jedoch vorgesehen, dass der obere Steg und der untere Steg des Flanschbauteils jeweils mehrere Materialausnehmungen aufweisen.

Korrespondierend zu den Materialausnehmungen am Steg des Flanschbauteils sieht eine bevorzugte Weiterbildung der Erfindung vor, dass der Flanschverbinder am oberen Querholm und am unteren Querholm mindestens einen Zapfen aufweist. Vorzugsweise weisen der obere Querholm und der untere Querholm des Flanschverbinders jeweils mehrere Zapfen auf. Auf diese Weise greifen bei der formschlüssigen Verbindung des in die Öffnung eingesteckten Flanschbauteils mit dem Elektroninstallationsgehäuse durch Aufstecken des rahmenförmigen Flanschverbinders die Zapfen des oberen Querholms in die Materialausnehmungen des oberen Stegs und die Zapfen des unteren Querholms in die Materialausnehmungen des unteren Stegs. Durch die formschlüssige Verbindung des in die Öffnung eingesteckten Flanschbauteils mit dem Flanschverbinder wird die Steifigkeit des Elektroinstallationsgehäuses im Bereich der Öffnung erhöht.

Eine weitere bevorzugte Weiterbildung der Erfindung sieht vor, dass das Flanschbauteil eine umlaufende Dichtung aufweist. Auf diese Weise wird die Öffnung in der Wandung durch Einstecken des Flanschbauteils und durch die formschlüssige Verbindung mit dem Flanschverbinder abgedichtet.

In diesem Zusammenhang sieht ein weitere bevorzugte Weiterbildung der Erfindung vor, dass die Schiene auf der Wange in ihrer Längsachse keilförmig ausgebildet ist, wobei das Profil der Schiene, ausgehend von der Aufstecköffnung, in Längsrichtung zunimmt und dass auch das seitliche Außenprofil des Flanschverbinders keilförmig ausgebildet ist, wobei sich das Außenprofil des Flanschverbinders in seiner Längsachse, ausgehend von der Einstecköffnung, verjüngt. Die keilförmige Schiene der Wange und das keilförmige Außenprofil des Flanschverbinders bewirken, dass das in die Öffnung der Wandung eingesteckte Flanschbauteil durch Aufstecken des Flanschverbinders auf den Steg des Flanschbauteils und die Schiene der Wange an die Öffnung der Wandung angepresst wird. Auf diese Weise wird die Öffnung in der Wandung des Elektroinstallationsgehäuses abgedichtet und die Steifigkeit erhöht.

Eine bevorzugte Weiterbildung der Erfindung sieht vor, dass das Flanschbauteil eine geschlossene Fläche aufweist. Auf diese Weise kann die Öffnung in der Wandung des Elektroinstallationsgehäuses vollständig abgedeckt werden, wobei in Kombination mit einer umlaufenden Dichtung die Öffnung staub- und spritzwasserdicht verschlossen wird.

Eine weitere bevorzugte Weiterbildung der Erfindung sieht vor, dass das Flanschbauteil ein Rahmen ist, mit einem ersten Steg auf einer ersten Seite des Rahmens zur Aufnahme in eine erste Öffnung und einem zweiten Steg auf einer zweiten Seite des Rahmens zur Aufnahme in eine zweite Öffnung. Auf diese Weise können zwei Elektroinstallationsgehäuse, die jeweils eine Öffnung aufweisen, miteinander verbunden werden.

In diesem Zusammenhang sieht eine weitere bevorzugte Weiterbildung der Erfindung vor, dass das Flanschbauteil eine erste umlaufende Dichtung auf der ersten Seite des Rahmens und eine zweite umlaufende Dichtung auf der zweiten Seite des Rahmens aufweist. Auf diese Weise können zwei Elektroinstallationsgehäuse, die jeweils eine Öffnung aufweisen, staub- und spritzwasserdicht miteinander verbunden werden.

Schließlich sieht eine weitere bevorzugte Weiterbildung der Erfindung vor, dass der rahmenartige Flanschverbinder mindestens einen Steg aufweist. Auf diese Weise wird, insbesondere für größere Öffnungen, die Gehäusestabilität im Bereich der Öffnung bei der formschlüssigen Verbindung des Flanschbauteils mit dem Elektroinstallationsgehäuse erhöht.

Weiterhin ist gemäß einer bevorzugten Weiterbildung der Erfindung zwischen den beiden seitlichen Riegeln und im Abstand zu diesen wenigstens ein mittlerer Riegel vorgesehen, der den oberen Querholm mit dem unteren Querholm verbindet. In diesem Zusammenhang ist vorzugsweise zusätzlich vorgesehen, dass im Verbindungsbereich des mittleren Riegels mit dem oberen Querholm und im Verbindungsbereich des mittleren Riegels mit dem unteren Querholm jeweils eine Sollbruchstelle vorgesehen ist, so dass der mittlere Riegel manuell, z.B. mit Hilfe eines Werkzeugs, herausbrechbar ist. Damit ist der Vorteil verbunden, dass der Flanschverbinder mittels des mittleren Riegels verstärkt wird, so dass bei der Installation eine höhere Kraft auf den Flanschverbinder aufgebracht werden kann. Nach der Installation kann der mittlere Riegel entfernt werden, womit eine Öffnung ohne störende Einbauten zur Verfügung steht.

Gemäß einer bevorzugten Weiterbildung der Erfindung sind mehrere mittlere Riegel vorgesehen. Als ein "mittlerer" Riegel wird dabei vorliegend ein solcher Riegel bezeichnet, der jedenfalls zwischen den beiden seitlichen Riegeln und im Abstand zu diesen vorgesehen ist und den oberen Querholm mit dem unteren Querholm verbindet. Für diese mittleren Riegel ist vorzugsweise vorgesehen, dass wenigstens ein Teil von ihnen mit einer zuvor beschriebenen Sollbruchstelle versehen ist.

Nachfolgend wird die Erfindung anhand eines bevorzugten Ausführungsbeispiels unter Bezugnahme auf die Zeichnung näher erläutert. In der Zeichnung zeigen:
- Fig. 1: eine isometrische Darstellung einer Öffnung in einer Wandung eines Elektroinstallationsgehäuses gemäß einem bevorzugten Ausführungsbeispiel der Erfindung,
- Fig. 2: ein Flanschbauteil mit einem umlaufenden Steg gemäß dem bevorzugten Ausführungsbeispiel der Erfindung, wobei der obere Steg und untere Steg Materialausnehmungen und die seitlichen Stege jeweils eine Aufkantung aufweisen,
- Fig. 3: einen rahmenartigen Flanschverbinder mit einem oberen Querholm, einem unteren Querholm und zwei seitlichen Riegeln gemäß dem bevorzugten Ausführungsbeispiel der Erfindung,
- Fig. 4a: einen Vertikalschnitt durch eine isometrische Darstellung des Elektroinstallationsgehäuses, der Öffnung, des Flanschbauteils und des Flanschverbinders im Bereich Außenprofil des Flanschverbinders gemäß dem bevorzugten Ausführungsbeispiel der Erfindung,
- Fig. 4b: einen Horizontalschnitt durch eine isometrische Darstellung des Elektroinstallationsgehäuses, der Öffnung, des Flanschbauteils und des Flanschverbinders gemäß dem bevorzugten Ausführungsbeispiel der Erfindung,
- Fig. 5a: einen Vertikalschnitt durch eine isometrische Darstellung des Elektroinstallationsgehäuses, der Öffnung, des Flanschbauteils und des Flanschverbinders im Bereich oberer Querholm und unterer Querholm des Flanschverbinders im nicht vollständig eingesteckten Zustand des Flanschverbinders gemäß dem bevorzugten Ausführungsbeispiel der Erfindung,
- Fig. 5b: einen Vertikalschnitt durch eine isometrische Darstellung des Elektroinstallationsgehäuses, der Öffnung, des Flanschbauteils und des Flanschverbinders im Bereich oberer Querholm und unterer Querholm des Flanschverbinders im eingesteckten Zustand des Flanschverbinders gemäß dem bevorzugten Ausführungsbeispiel der Erfindung,
- Fig. 6: ein rahmenartiges Flanschbauteil mit einem ersten umlaufenden Steg auf einer ersten Seite des Flanschbauteils und einem zweiten umlaufenden Steg auf einer zweiten Seite des Flanschbauteils gemäß dem bevorzugten Ausführungsbeispiel der Erfindung und
- Fig. 7: einen Schnitt durch eine dreidimensionale Darstellung zweier Elektroinstallationsgehäuse, die durch das rahmenartige Flanschbauteil miteinander verbunden sind gemäß dem bevorzugten Ausführungsbeispiel der Erfindung.

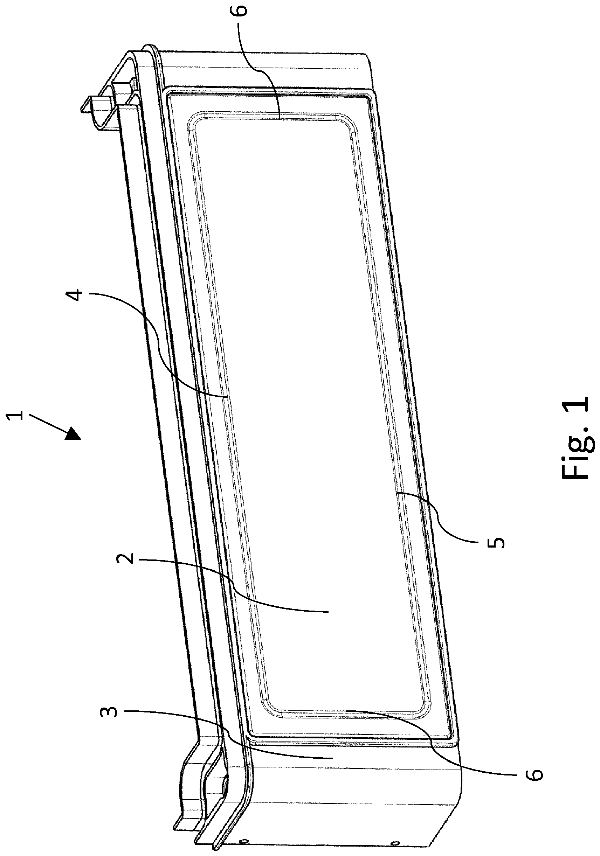

Aus Figur 1 ist ein Teil eines Elektroinstallationsgehäuses 1 mit einer Öffnung 2 in einer Wandung 3 des Elektroinstallationsgehäuses 1 gemäß einem bevorzugten Ausführungsbeispiel der Erfindung ersichtlich. Die Öffnung 2 weist eine rechteckige Form mit einer oberen Durchbruchkante 4, einer unteren Durchbruchkante 5 und zwei seitlichen Durchbruchkanten 6 auf.

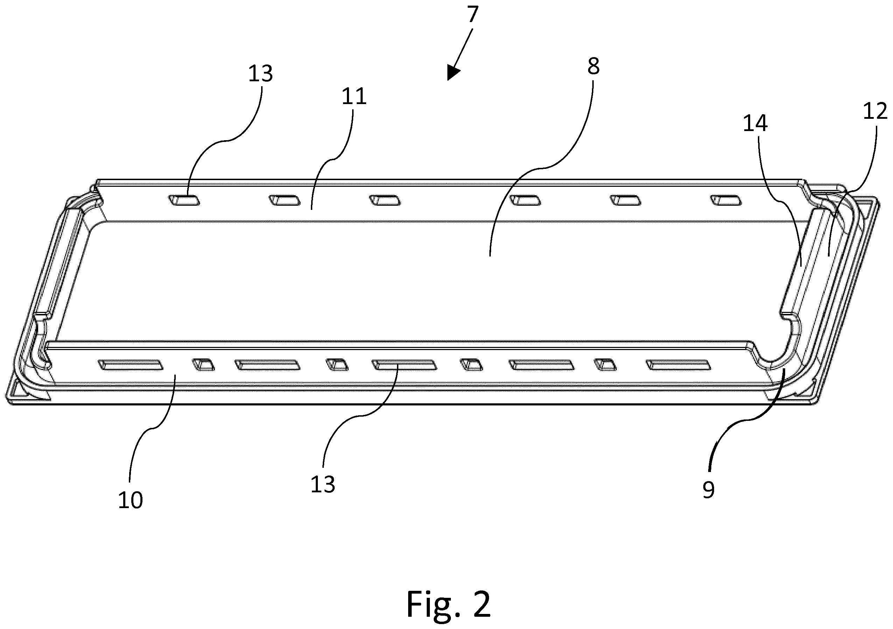

In Figur 2 ist ein Flanschbauteil 7 mit einer geschlossenen Fläche 8 und einem umlaufenden Steg 9 zum Einstecken in die zuvor gezeigte Öffnung 2 dargestellt, wobei der umlaufende Steg 9 einen oberen Steg 10 einen unteren Steg 11 und zwei seitliche Stege 12 aufweist. Sowohl der obere Steg 10 als auch der untere Steg 11 weisen Materialausnehmungen 13 auf und die seitlichen Stege 12 jeweils eine nach innen gerichtete Aufkantung 14. Der umlaufende Steg 9 ist in den Eckbereichen unterbrochen, wobei sich die Unterbrechung nicht über die gesamte Stegtiefe erstreckt. Die Unterbrechung des umlaufenden Stegs 9 in den Eckbereichen ist vorgesehen, damit ein in dieser Figur nicht dargestellter Flanschverbinder 15 für eine formschlüssige Verbindung des Flanschbauteils 7 mit dem Elektroinstallationsgehäuse 1 über die Aufkantung 14 der seitlichen Stege 12 aufgesteckt werden kann.

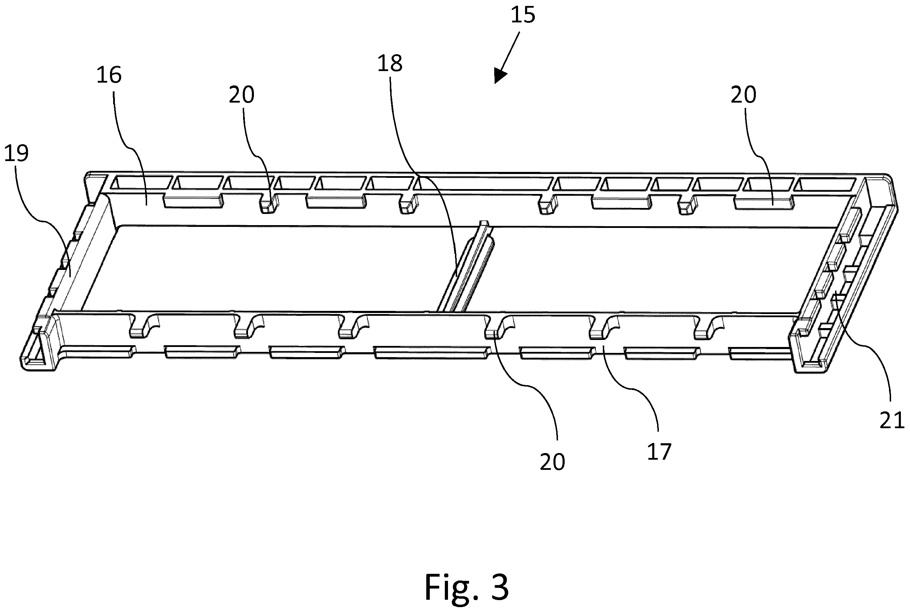

In Figur 3 ist ein rahmenartiger Flanschverbinder 15 mit einem oberen Querholm 16, einem unteren Querholm 17, einem mittleren Riegel 18 und zwei äußeren Riegeln 19 gezeigt, wobei der obere Querholm 16 und der unteren Querholm 17 an ihrer jeweiligen Unterseite Zapfen 20 aufweisen und die seitlichen Riegel 19 an ihrer Außenkante jeweils ein Außenprofil 21. Der mittlere Riegel 18 ist mit Sollbruchstellen an seinen Übergängen auf den obere Querholm 16 bzw. auf den unteren Querholm 17 versehen, so dass der mittlere Riegel 18 manuell herausbrechbar ist.

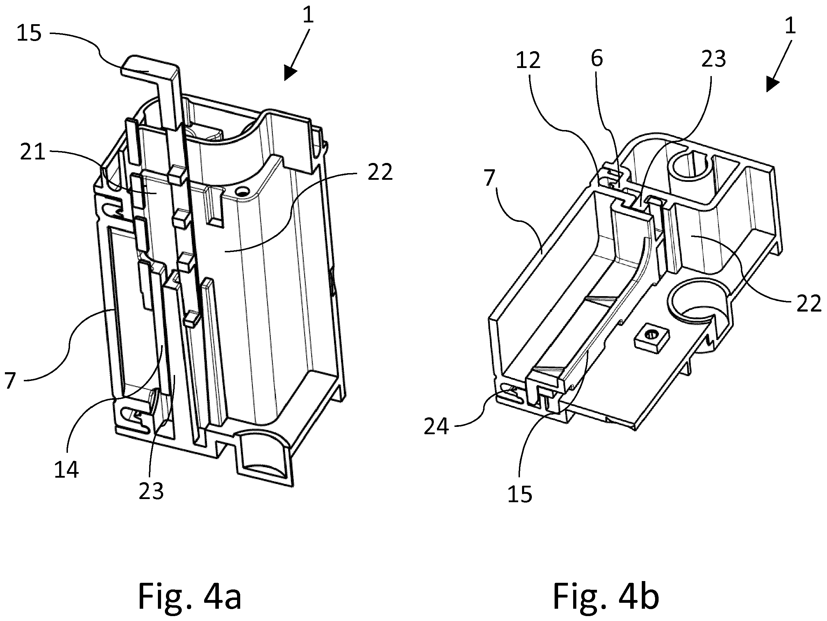

Wie den Figuren 4a und 4b entnehmbar, ist das Flanschbauteil 7 in die Öffnung 2 des Elektroinstallationsgehäuses 1 eingesteckt. Weiterhin ist ersichtlich, dass die Öffnung 2 an ihrer seitlichen Durchbruchkante 6 eine Wange 22 mit einer Schiene 23 aufweist. Zur formschlüssigen Verbindung des in die Öffnung 2 eingesteckten Flanschbauteils 7 mit dem Elektroinstallationsgehäuse 1 wird das Außenprofil 21 des Flanschverbinders 15 über die Aufkantung 14 des seitlichen Stegs 12 und die Schiene 23 der Wange 22 aufgesteckt. Eine Anpressung des Flanschbauteils 7 an die Wandung 2 des Installationsgehäuses 1 wird durch die keilförmige Ausgestaltung des Außenprofils 21 und der Schiene 23 erzielt. Des Weiteren weist das Flanschbauteil 7 entlang des umlaufenden Stegs 12 eine umlaufende Dichtung 24 auf. Auf diese Weise kann mit dem Flanschbauteil 7 die Öffnung 2 in der Wandung 3 des Elektroinstallationsgehäuses staub- und spritzwasserdicht abgedichtet werden.

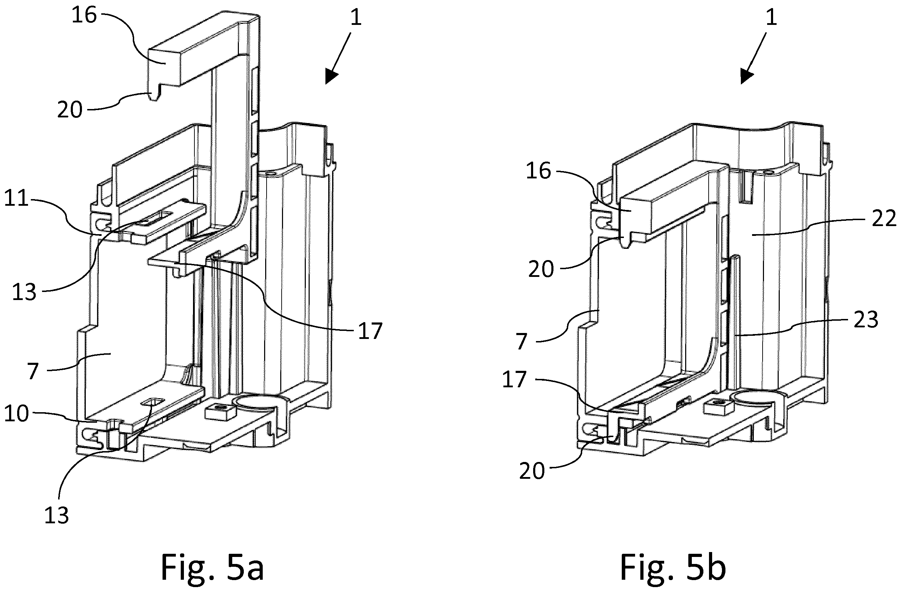

Wie den Figuren 5a und 5b entnehmbar, greifen bei der formschlüssigen Verbindung des in die Öffnung 2 eingesteckten Flanschbauteils 7 mit dem Elektroinstallationsgehäuse 1 die Zapfen 20 des oberen Querholms 16 des Flanschverbinders 15 in die Materialausnehmungen 13 des oberen Stegs 11 des Flanschbauteils 7 und ebenso die Zapfen 20 des unteren Querholms 17 in die Materialausnehmungen 13 des unteren Stegs 10. Auf diese Weise wird zusätzlich zur formschlüssigen Verbindung des Flanschbauteils 7 an das Elektroinstallationsgehäuse 1 über die Aufkantung 14 der seitlichen Stege 12 eine Verzahnung des oberen Querholms 16 und des unteren Querholms 17 mit dem Flanschverbinder 15 geschaffen, wodurch die Stabilität der Wandung 3 des Elektroinstallationsgehäuses 1 erhöht wird.

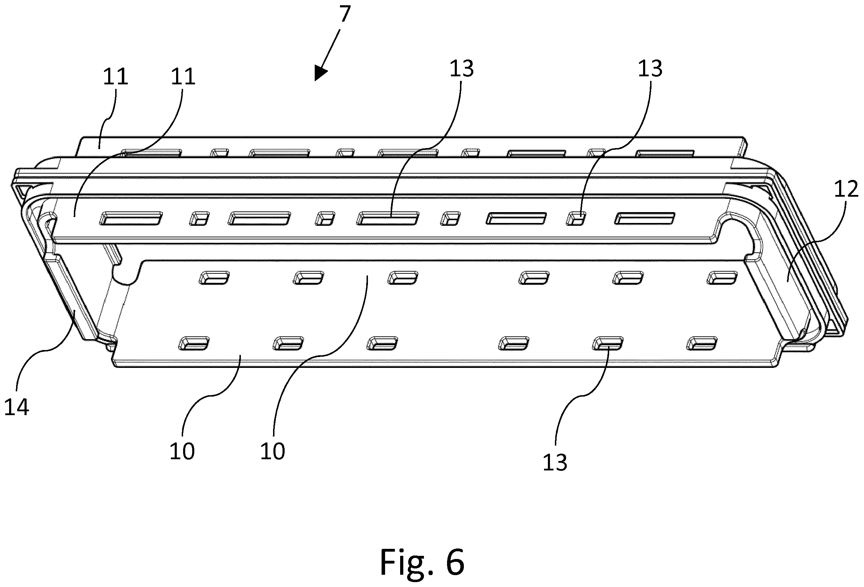

In Figur 6 ist ein rahmenartiges Flanschbauteil 7 mit einem ersten umlaufenden Steg 9 auf einer ersten Seite des Rahmens zur Aufnahme in eine erste Öffnung 2 und einem zweiten umlaufenden Steg 9 auf einer zweiten Seite des Rahmens zur Aufnahme in eine zweite Öffnung 2 gezeigt. Der obere Steg 11 und der untere Steg 10 der ersten Seite und der zweiten Seite weisen Materialausnehmungen 13 auf und die seitlichen Stege 12 der ersten Seite und der zweiten Seite eine nach innen gerichtete Aufkantung 14. Die Eckbereiche des umlaufenden Stegs 9 der ersten Seite und der zweiten Seite sind unterbrochen, wobei sich die Unterbrechung nicht über die gesamte Stegtiefe erstreckt.

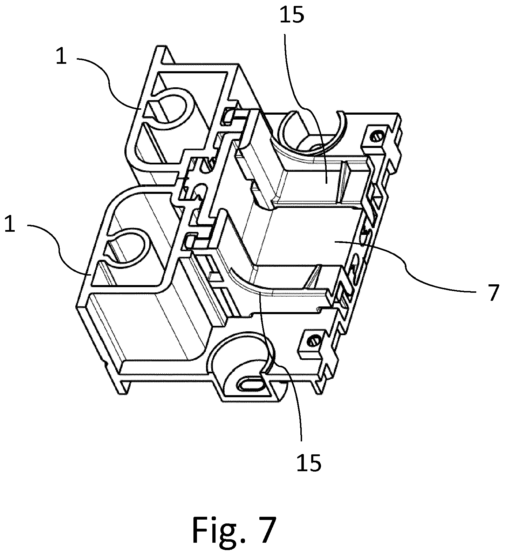

Wie der Figur 7 entnehmbar, verbindet das rahmenartige Flanschbauteil 7 das erste Elektroinstallationsgehäuse 1 mit der ersten Öffnung 2 und das zweite Elektroinstallationsgehäuse 1 mit der zweiten Öffnung 2. Für die formschlüssige Verbindung des ersten Elektroinstallationsgehäuses 1 und des zweiten Elektroinstallationsgehäuses 1 wird die erste Seite des rahmenartigen Flanschbauteils 7 in die erste Öffnung 2 gesteckt und mit dem ersten rahmenartigen Flanschverbinder 15 formschlüssig verbunden, wobei das Außenprofil 21 auf die Aufkantung 14 des seitlichen Stegs 12 und die Schiene 23 der Wange 22 gesteckt wird. Die formschlüssige Verbindung der zweiten Öffnung 2 an die zweite Seite des Flanschbauteils 7 erfolgt in gleicher Weise.
- 1: Elektroinstallationsgehäuse
- 2: Öffnung
- 3: Wandung
- 4: obere Durchbruchkante
- 5: untere Durchbruchkante
- 6: seitliche Durchbruchkante
- 7: Flanschbauteil
- 8: geschlossene Fläche
- 9: Steg
- 10: unterer Steg
- 11: oberer Steg
- 12: seitlicher Steg
- 13: Materialausnehmung
- 14: Aufkantung
- 15: Flanschverbinder
- 16: oberer Querholm
- 17: unterer Querholm
- 18: mittlerer Riegel
- 19: seitlicher Riegel
- 20: Zapfen
- 21: Außenprofil
- 22: Wange
- 23: Schiene
- 24: Dichtung

## Patentansprüche

1. Elektroinstallationsgehäuse (1), mit einem Wandungen (3) aufweisenden Gehäuseteil, einem zur Aufnahme in einer Öffnung (2) einer Wandung (3) vorgesehenen Flanschbauteil (7) und einem Flanschverbinder (15), **dadurch gekennzeichnet, dass**
der Flanschverbinder (15) rahmenartig ausgebildet ist und zwei seitliche Riegel (19), einen oberen Querholm (16) und einen unteren Querholm (17) aufweist,
der Flanschverbinder (15) zur Verriegelung des Flanschbauteils (7) in der Öffnung (2) vorgesehen ist, indem das Flanschbauteil (7) in der Öffnung (2) mit dem Flanschverbinder (15) formschlüssig verbindbar ist, und
der Flanschverbinder (15) innerhalb des Elektroinstallationsgehäuses (1) auf das in die Öffnung (2) eingesteckte Flanschbauteil (7) aufsteckbar ist.

2. Elektroinstallationsgehäuse nach Anspruch 1, wobei die Öffnung (2) rechteckig mit einer oberen Durchbruchkante (4), einer unteren Durchbruchkante (5) und zwei seitlichen Durchbruchkanten (6) ausgebildet ist und eine seitliche Wange (22) an einer seitlichen Durchbruchkante (6) mit einer parallel zu dieser verlaufenden Schiene (23) aufweist.

3. Elektroinstallationsgehäuse nach Anspruch 1 oder 2, wobei das Flanschbauteil (7) einen Steg (9) mit einer Aufkantung (14) und einer der Aufkantung (14) gegenüberliegende flache Stegseite aufweist.

4. Elektroinstallationsgehäuse nach einem der Ansprüche 1 bis 3, wobei wenigstens einer der seitlichen Riegel (19) des Flanschverbinders (15) ein Außenprofil (21) aufweist.

5. Elektroinstallationsgehäuse nach einem der Ansprüche 1 bis 4, wobei im eingesteckten Zustand des Flanschbauteils (7) in die Öffnung (2) die flache Stegseite des Flanschbauteils (7) an der Wange (22) der Öffnung (2) anliegt und für eine formschlüssige Verbindung des Flanschbauteils (7) mit dem Elektroinstallationsgehäuse (1), das Flanschbauteil (7) mit dem Außenprofil (21) über die Aufkantung (14) des Stegs (9) und die Schiene (23) der Wange (22) schiebbar ist.

6. Elektroinstallationsgehäuse nach einem der Ansprüche 1 bis 5, wobei das Flanschbauteil (7) einen umlaufenden Steg (9) mit zwei seitlichen Stegen (12), einem oberen Steg (11) und einen unteren Steg (10) aufweist, wobei die Eckbereiche unterbrochen sind.

7. Elektroinstallationsgehäuse nach einem der Ansprüche 1 bis 6, wobei der obere Steg (11) und der untere Steg (10) des Flanschbauteils (7) jeweils mehrere Materialausnehmungen (13) aufweist und der obere Querholm (16) und der untere Querholm (17) des Flanschverbinders (15) jeweils mehrere Zapfen (20).

8. Elektroinstallationsgehäuse nach einem der Ansprüche 1 bis 7, wobei die Schiene (23) auf der Wange (22) in ihrer Längsachse keilförmig ausgebildet ist und das seitliche Außenprofil (21) des Flanschverbinders (15) keilförmig ausgebildet ist.

9. Elektroinstallationsgehäuse nach einem der Ansprüche 1 bis 8, wobei das Flanschbauteil (7) ein Rahmen ist, mit einem ersten Steg (9) auf einer ersten Seite des Rahmens zur Aufnahme in eine erste Öffnung (2) und einem zweiten Steg (9) auf einer zweiten Seite des Rahmens zur Aufnahme in eine zweite Öffnung (2).

10. Elektroinstallationsgehäuse nach einem der Ansprüche 1 bis 9, wobei zwischen den beiden seitlichen Riegeln (19) und im Abstand zu diesen ein mittlerer Riegel (18) vorgesehen ist, der den oberen Querholm (16) mit dem unteren Querholm (17) verbindet.

11. Elektroinstallationsgehäuse nach Anspruch 10, wobei im Verbindungsbereich des mittleren Riegels (18) mit dem oberen Querholm und (16) im Verbindungsbereich des mittleren Riegels (18) mit dem unteren Querholm (17) jeweils eine Sollbruchstelle vorgesehen ist, so dass der mittlere Riegel (18) manuell herausbrechbar ist.

## Claims

1. An electrical installation housing (1), with a housing part comprising walls (3), a flange component (7) intended to be received in an opening (2) of a wall (3), and a flange connector (15), **characterised in that**
the flange connector (15) is frame-like and has two lateral bars (19), an upper cross member (16), and a lower cross member (17),
the flange connector (15) is intended to lock the flange component (7) in the opening (2) **in that** the flange component (7) can be connected to the flange connector (15) in a form-fitting manner in the opening (2), and
the flange connector (15) within the electrical installation housing can be attached to the flange component (7) inserted into the opening (2).

2. The electrical installation housing according to claim 1, wherein the opening (2) is rectangular with an upper opening edge (4), a lower opening edge (5), and two lateral opening edges (6) and a lateral cheek (22) on a lateral opening edge (6) with a rail (23) running parallel thereto.

3. The electrical installation housing according to claim 1 or 2, wherein the flange component (7) has a web (9) with a bent edge (14) and a flat web face opposite the bent edge (14).

4. The electrical installation housing according to any one of claims 1 to 3, wherein at least one of the lateral bars (19) of the flange connector (15) has an outer profile (21).

5. The electrical installation housing according to any one of claims 1 to 4, wherein, when the flange component (7) is inserted into the opening (2), the flat web face of the flange component (7) bears against the cheek (22) of the opening (2), and, for a form-fitting connection of the flange component (7) to the electrical installation housing (1), the flange component (7) can be slid via the outer profile (21) over the bent edge (14) of the web (9) and the rail (23) of the cheek (22).

6. The electrical installation housing according to any one of claims 1 to 5, wherein the flange component (7) has a peripheral web (9) with two lateral webs (12), an upper web (11), and a lower web (10), wherein the corner regions are interrupted.

7. The electrical installation housing according to any one of claims 1 to 6, wherein the upper web (11) and the lower web (10) of the flange component (7) each have a plurality of material recesses (13) and the upper cross member (16) and the lower cross member (17) of the flange connector (15) each have a plurality of lugs (20).

8. The electrical installation housing according to any one of claims 1 to 7, wherein the rail (23) on the cheek (22) is wedge-shaped in its longitudinal axis and the lateral outer profile (21) of the flange connector (15) is wedge-shaped.

9. The electrical installation housing according to any one of claims 1 to 8, wherein the flange component (7) is a frame, with a first web (9) on a first side of the frame to be received in a first opening (2) and a second web (9) on a second side of the frame to be received in a second opening (2) .

10. The electrical installation housing according to any one of claims 1 to 9, wherein a middle bar (18) is provided between the two lateral bars (19) and at a distance therefrom and connects the upper cross member (16) to the lower cross member.

11. The electrical installation housing according to claim 10, wherein a predetermined breaking point is provided in the connection region of the middle bar (18) to the upper cross member (16) and in the connection region of the middle bar (18) to the lower cross member (17), such that the middle bar (18) can be broken out manually.

## Revendications

1. Boîtier d'installation électrique (1), doté d'une partie de boîtier présentant des parois (3), d'un composant de bride (7), prévu pour la réception dans un orifice (2) d'une paroi (3), et d'une bride de raccordement (15), **caractérisé en ce que**
la bride de raccordement (15) est conçu sous forme d'un châssis et présente deux verrous (19) latéraux, une barre transversale supérieure (16) et une barre transversale inférieure (17),
la bride de raccordement (15) est prévue pour le verrouillage du composant de bride (7) dans l'orifice (2), **en ce que** le composant de bride (7) peut être relié par complémentarité des formes avec la bride de raccordement (15) dans l'orifice (2), et
la bride de raccordement (15) peut être branchée sur le composant de bride (7) inséré dans l'orifice (2) à l'intérieur du boîtier d'installation électrique (1).

2. Boîtier d'installation électrique selon la revendication 1, dans lequel l'orifice (2) est conçu rectangulaire avec un bord d'ouverture supérieur (4), un bord d'ouverture inférieur (5) et deux bords d'ouverture latéraux (6) et présente un méplat (22) latéral au niveau d'un bord d'ouverture latéral (6) avec un rail (23) s'étendant parallèlement par rapport à celui-ci.

3. Boîtier d'installation électrique selon la revendication 1 ou 2, dans lequel le composant de bride (7) présente une nervure (9) dotée d'un rebord (14) et d'une face de nervure plate située en face du rebord (14).

4. Boîtier d'installation électrique selon l'une des revendications 1 à 3, dans lequel au l'un des verrous latéraux (19) de la bride de raccordement (15) présente un profilé extérieur (21).

5. Boîtier d'installation électrique selon l'une des revendications 1 à 4, dans lequel, dans l'état branché du composant de bride (7) dans l'orifice (2), la face plate de la nervure du composant de bride (7) est adjacente au méplat (22) de l'orifice (2) et, pour une liaison par complémentarité des formes du composant de bride (7) avec le boîtier d'installation électrique (1), le composant de bride (7) peut être coulissé avec le profilé extérieur (21) par-dessus le rebord (14) de la nervure (9) et le rail (23) du méplat (22).

6. Boîtier d'installation électrique selon l'une des revendications 1 à 5, dans lequel le composant de bride (7) présente une nervure (9) circonférentielle avec deux nervures latérales (12), une nervure supérieure (11) et une nervure inférieure (10), les zones des angles étant interrompues.

7. Boîtier d'installation électrique selon l'une des revendications 1 à 6, dans lequel la nervure supérieure (11) et la nervure inférieure (10) du composant de bride (7) présentent respectivement plusieurs évidements de matière (13), et la barre transversale supérieure (16) et la barre transversale inférieure (17) de la bride de raccordement (15) présentent respectivement plusieurs ergots (20).

8. Boîtier d'installation électrique selon l'une des revendications 1 à 7, dans lequel le rail (23) sur le méplat (22) est conçu en forme de cône sur son axe longitudinal et le profilé extérieur (21) latéral de la bride de raccordement (15) est conçu de forme conique.

9. Boîtier d'installation électrique selon l'une des revendications 1 à 8, dans lequel le composant de bride (7) est un châssis, avec une première nervure (9) sur un premier côté du châssis pour la réception dans un premier orifice (2) et une deuxième nervure (9) sur un deuxième côté du châssis pour la réception dans un deuxième orifice (2).

10. Boîtier d'installation électrique selon l'une des revendications 1 à 9, dans lequel, entre les deux verrous latéraux (19), et à distance par rapport à ceux-ci, il est prévu un verrou central (18) qui relie la barre transversale supérieure (16) avec la barre transversale inférieure (17).

11. Boîtier d'installation électrique selon la revendication 10, dans lequel, dans la zone de jonction du verrou central (18) avec la barre transversale supérieure (16) et dans la zone de liaison du verrou central (18) avec la barre centrale inférieure (17), il est respectivement prévu un point de rupture souhaitée de sorte que le verrou central (18) puisse être extrait manuellement par rupture.
